# EUROPÄISCHE PATENTANMELDUNG

(11) **EP 1 955 891 A2**
(43) Veröffentlichungstag der Anmeldung: **13.08.2008**
(21) Anmeldenummer: 08001772.6
(22) Anmeldetag: 31.01.2008
(51) Int. Cl.: B60N 2/30, B60N 2/44

(54) **Fahrzeugklappsitz**

(30) Priorität: 07.02.2007 DE 202007001735 U
(71) Anmelder: Brose Fahrzeugteile GmbH & Co. Kommanditgesellschaft, Coburg, 96450 Coburg (DE)
(72) Erfinder: Scheck, Georg, 96479 Weitramsdorf (DE); Neumann, Guido, 98693 Ilmenau (DE)
(74) Vertreter: Tergau & Pohl Patentanwälte

(57) **Zusammenfassung**

Es wird ein Fahrzeugklappsitz (1) angegeben, mit einer Sitzfläche (2), mit einer Rückenlehne (3) und mit einer Sitzbasis (4), wobei die Sitzfläche (2) und die Rückenlehne (3) rückwärtig in eine Endposition verfahrbar sind, die Verfahrbewegung der Sitzfläche (2) mit der Verfahrbewegung der Rückenlehne (3) gekoppelt ist, und während der Verfahrbewegung die Rückenlehne (3) bezüglich der Sitzfläche (2) eine Rotationsbewegung um eine erste Drehachse (5) ausführt, und die Sitzfläche (2) bezüglich der Sitzbasis (4) eine Rotationsbewegung um eine zweite Drehachse (6) ausführt, wobei beide Drehachsen (5,6) zueinander parallelverschoben angeordnet sind.

## Beschreibung

Die Erfindung betrifft einen verstellbaren Fahrzeugklappsitz.

Bei solchen Klappsitzen, die insbesondere als Hinterraumsitz für ein Kraftfahrzeug Verwendung finden, werden teilweise während des Wegklappvorgangs die Sitzlehne und die Sitzfläche voneinander getrennt. So ist beispielsweise in der FR 2 860 460 A1 ein Sitzklappsystem dargestellt, bei welchem bei dem Einklappen des Fahrzeugklappsitzes die Rückenlehne nach vorne geklappt, und die Sitzfläche anschließend um 180° nach vorne gedreht wird. In der Endposition sind dann die Sitzfläche und die Lehne beide in vertikaler Ausrichtung bezüglich der Fahrzeuglängsache hintereinander angeordnet und nehmen dadurch einen großen Anteil der Bodenfläche des erweiterten Fahrzeuginnenraums ein. Weiterhin ist ein Sitzklappsystem bekannt, beispielsweise aus der EP 1 491 388 A2, bei dem die Sitzlehne nach vorne auf die Sitzfläche geklappt, und dann die Sitzfläche über einen Hebelarm, auf dem sie montiert wird, in einer dafür eingerichteten Wanne im Fahrzeughinterraum versenkt wird.

Der Erfindung liegt die Aufgabe zugrunde, einen Fahrzeugklappsitz anzugeben, der mit einer Bewegung in eine platzsparende Endposition verstellbar ist.

Die Aufgabe wird erfindungsgemäß durch die Merkmale des Anspruchs 1 gelöst. Danach wird ein Fahrzeugklappsitz angegeben, mit einer Sitzfläche, mit einer Rückenlehne und mit einer Sitzbasis. Die Sitzfläche und die Rückenlehne sind rückwärtig in eine Endposition verfahrbar, wobei die Verfahrbewegung der Sitzfläche mit der Verfahrbewegung der Rückenlehne gekoppelt ist. Während der Verfahrbewegung führt die Rückenlehne bezüglich der Sitzfläche eine Rotationsbewegung um eine erste Drehachse aus, und die Sitzfläche führt bezüglich der Sitzbasis eine Rotationsbewegung um eine zweite Drehachse aus, wobei beide Drehachsen zueinander parallel angeordnet sind. In besonders einfacher Ausführung der Klappmechanik sind beide Drehachsen bezüglich der Sitzfläche in einer festen räumlichen Beziehung angeordnet.

Durch die erfindungsgemäße Klappmechanik wird ermöglicht, durch eine gekoppelte Drehung, bei der die Rückenlehne auf die Sitzfläche geklappt wird und zeitgleich die Sitzfläche rückwärtig nach hinten bis in die Endposition geklappt wird, den Fahrzeugklappsitz mit nur einer Bewegung platzsparend in eine Endposition zu verfahren. Als Endposition des Fahrzeugklappsitzes ist die gemeinsame Endposition der Rückenlehne und der Sitzfläche zu verstehen, die durch mechanische Kopplung der Drehbewegung eindeutig definiert ist. Die Sitzbasis, welche beispielsweise durch ein am Fahrzeugchassis zu befestigendes Sitzgestell, durch Montagepunkte oder durch Lagerstellen vorgegeben sein kann, wird feststehend oder längsverschiebbar in einem Fahrzeug montiert.

Vorteilhafterweise sind in der Endposition die Rückenlehne und die Sitzfläche im wesentlichen parallel zueinander angeordnet. Diese Anordnung stellt eine besonders kompakte und platzsparende Konfiguration dar. Insbesondere sind in der Endposition die Rückenlehne und die Sitzfläche im wesentlichen horizontal angeordnet.

Weiterhin sind bevorzugterweise die Sitzfläche oder die Rückenlehne in der Endposition zumindest teilweise versenkt, beispielsweise in einer dafür eingerichteten Wanne, so dass der Fahrzeugklappsitz in der Endposition einen vorteilhaft geringen Platzbedarf im Fahrzeuginnenraum aufweist.

In der Endposition ist dabei geeigneterweise die Unterseite der Sitzfläche im wesentlichen höhengleich zu einer Basisfläche im rückseitigen Fahrzeuginnenraum, insbesondere dem Kofferraumboden, angeordnet. Der Fahrzeugklappsitz ist somit in der Endposition im wesentlichen vollständig versenkt.

Die Kopplung der Drehbewegungen der Sitzfläche und der Rückenlehne ist vorteilhafterweise realisiert durch ein auf der ersten Drehachse angeordnetes erstes Ritzel, ein auf der zweiten Drehachse angeordnetes zweites Ritzel, sowie ein diesen Ritzeln wirkungsmäßig zwischengeschaltetes Kopplungsritzel. Das erste Ritzel ist fest mit der Rückenlehne verbunden, und drehbar um die erste Drehachse an der Sitzfläche gelagert. Es dreht sich somit beim Einklappen des Sitzes mit der Rückenlehne. Das zweite Ritzel ist fest mit der Sitzbasis verbunden, und damit beim Einklappen relativ zur Umgebung feststehend. Das Kopplungsritzel ist bezüglich der Sitzfläche drehbar gelagert, insbesondere an der Sitzfläche selbst. Es besitzt relativ zur Sitzfläche nur einen rotatorischen Freiheitsgrad. Insbesondere ist die Drehachse des Kopplungsritzels parallel zur ersten und mithin auch zur zweiten Drehachse ausgerichtet. Das erste Ritzel und das zweite Ritzel sind über das Kopplungsritzel miteinander gekoppelt.

Zum Einklappen des Fahrzeugklappsitzes in den Endzustand wird das Kopplungsritzel bezüglich der Klappsitzposition auf dem zweiten Ritzel in rückwärtige Bewegung versetzt, und rollt somit über dem festen zweiten Ritzel ab. Die Sitzfläche wird hierdurch aus der ausgeklappten Position nach hinten verschwenkt. Gleichzeitig wird das erste Ritzel in eine gegenüber der Rotation des Kopplungsritzels gegensinnige Rotation versetzt, so dass die Rückenlehne zur Sitzfläche hin gedreht wird. Die Wegstrecke, die das Kopplungsritzel von der ausgeklappten Position bis in die eingeklappte oder Endposition des Fahrzeugklappsitzes auf dem zweiten Ritzel abrollt, ist das Produkt aus dem Radius des zweiten Ritzels und der Winkeldifferenz zwischen der Anfangs- und der Endposition der Sitzfläche, die im folgenden als zweite Winkeldifferenz bezeichnet wird. Durch die Kopplung der Drehbewegung ist die von dem Kopplungsritzel zurückgelegte Wegstrecke genauso groß wie die Wegstrecke, die ein Punkt auf der Peripherie des ersten Ritzels während des Einklapprozesses durchläuft. Diese durchlaufene Wegstrecke ist gleich dem Produkt aus dem Radius des ersten Ritzels und die Winkeldifferenz zwischen der Anfangs- und der Endposition der Rückenlehne bezüglich der Sitzfläche, die im folgenden als erste Winkeldifferenz bezeichnet wird. Als Randbedingung der Bewegungskopplung gilt somit, dass beide Produkte gleich sind. Somit ist auch das Verhältnis der Radien des ersten und zweiten Ritzels gleich dem Verhältnis der zweiten zur ersten Winkeldifferenz.

Günstigerweise ist die erste Winkeldifferenz der Rückenlehne kleiner als 180°. Bei einem Einklappen des Sitzes in eine Endposition, in der insbesondere die Unterseite der Sitzfläche zum Boden des Fahzeuginnenraums höhengleich angeordnet ist, wird die zweite Winkeldifferenz der Sitzfläche in etwa 180° betragen. Somit ist vorteilhafterweise der Radius des ersten Ritzels größer als der Radius des zweiten Ritzels.

Zweckdienlicherweise sind die erste Drehachse, die zweite Drehachse und die Rotationsachse des Kopplungsritzels auf einem gemeinsamen Sitzgestänge oder Sitzrahmen angeordnet. Ein solches Sitzgestänge ist fest mit der Sitzfläche verbunden. Beispielsweise können die Achsen koplanar angeordnet sein.

Der Fahrzeugklappsitz ist bevorzugterweise durch eine motorische Antriebseinheit angetrieben, die insbesondere direkt auf das Kopplungsritzel wirkt. Alternativ dazu kann die Klappmechanik aber auch für eine manuelle Betätigung ausgebildet sein. Dabei würde insbesondere bei einem Anheben der Sitzfläche aus der Verrastung in ausgeklappter Position das Kopplungsritzel durch das feststehende zweite Ritzel automatisch in Bewegung versetzt und würde das erste Ritzel zu einem Einklappen der Rückenlehne zur Sitzfläche hin antreiben.

In der Endposition, in der insbesondere die Unterseite der Sitzfläche nach oben zeigt, ist die Sitzfläche geeigneterweise auch verrastbar. Somit muss die Antriebseinheit kein permanentes Drehmoment ausüben, um den Fahrzeugklappsitz in der Endposition stabil zu halten.

Nachfolgend wird ein Ausführungsbeispiel des erfindungsgemäßen Fahrzeugklappsitzes anhand einer Zeichnung näher diskutiert. Dabei zeigen in schematischer Darstellung
- Fig. 1: den Fahrzeugklappsitz in ausgeklappter Position,
- Fig. 2: den Fahrzeugklappsitz in einer ersten Zwischenposition,
- Fig. 3: den Fahrzeugklappsitz in einer weiteren Zwischenposition, und
- Fig. 4: den Fahrzeugklappsitz in der platzsparenden Endposition.

Einander entsprechende Teile sind in allen Figuren stets mit gleichen Bezugszeichen versehen.

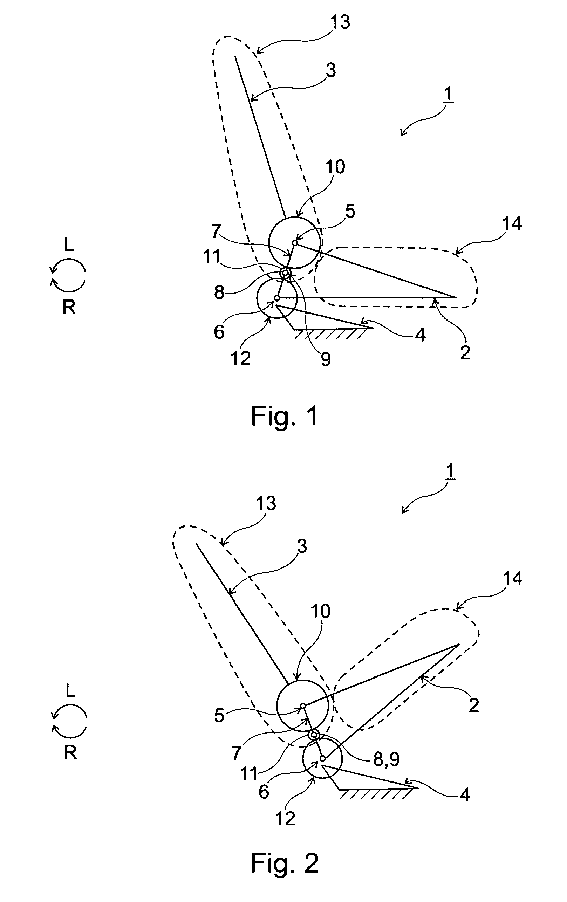

In Fig. 1 ist ein Fahrzeugklappsitz 1 in ausgeklappter Position dargestellt. Der Fahrzeugklappsitz 1 umfasst eine Sitzfläche 2, eine Rückenlehne 3, sowie eine ortsfest montierbare Sitzbasis 4. Die Rückenlehne 3 ist relativ zur Sitzfläche 2 um eine Drehachse 5, die horizontal liegt und die in Einbauposition insbesondere orthogonal zur Fahrzeuglängsachse ausgerichtet ist, drehbar gelagert. Auf der Drehachse ist ein erstes Ritzel 10 angeordnet, welches fest mit der Rückenlehne 3 verbunden ist. Die Sitzfläche 2 ist relativ zur Sitzbasis 4 um die Drehachse 6 drehbar gelagert, wobei die Drehachse 6 gegenüber der Drehachse 5 parallelverschoben angeordnet ist. Auf der Drehachse 6 ist ein bezüglich der Sitzbasis 4 feststehendes zweites Ritzel 12 angeordnet, um welches die Sitzfläche 2 umklappbar ist. Auf einem fest mit der Sitzfläche 2 verbundenem Sitzgestänge 7 ist ein Kopplungsritzel 11 angeordnet und zu diesem Sitzgestänge 2 drehbar um eine Achse 8 gelagert, wobei die Achse 8 parallelverschoben und koplanar zu den Drehachsen 5 und 6 liegt und das Sitzgestänge 7 schneidet. Das Kopplungsritzel 11 kämmt sowohl mit dem ersten Ritzel 10 als auch mit dem zweiten Ritzel 12 und koppelt die Drehbewegungen beider Ritzel 10 und 12. Wird nun in der Darstellungsebene das Kopplungsritzel 11 um die Achse 8 in positiver Umlaufrichtung L gedreht, so bewegt es sich auf dem zweiten Ritzel 12 in positiver Umlaufrichtung L, so dass die Sitzfläche 2 angehoben und umgeklappt wird. Gleichzeitig dreht sich das erste Ritzel 10 um die Drehachse 5 in negativer Umlaufrichtung R und klappt die Rückenlehne 3 auf die Sitzfläche 2 zu. Mit dem Kopplungsritzel 11 ist eine motorische Antriebseinheit 9 verbunden, durch welche das Kopplungsritzel 11 angesteuert wird. Die gestrichelten Linien stellen einen Sitzbezug 14 und einen Rückenlehnenbezug 13 dar.

In Fig. 2 ist der Fahrzeugklappsitz 1 in einer ersten Zwischenposition dargestellt, in der die Sitzfläche 2 durch eine Bewegung des Kopplungsritzels 11 auf dem mit der Sitzbasis 4 fest verbundenen Ritzel 12 angehoben wurde und damit der Fahrzeugklappsitz 1 eine rückwärtige Bewegung eingeleitet hat. Gleichzeitig bewegt sich die Rückenlehne 3 auf die Sitzfläche 2 zu. Bei der Klappbewegung überstreicht zwischen zwei Zeitpunkten die Rückenlehne 3 relativ zur Sitzfläche 2 eine erste Winkeldifferenz. In demselben Zeitintervall überstreicht die Sitzfläche 2 relativ zur Sitzbasis 4 eine zweite Winkeldifferenz. Durch die Zwangsbedingungen des mechanischen Systems ist das Verhältnis der Radien des ersten Ritzel 10 zum zweiten Ritzel 12 gleich dem Verhältnis der ersten zur zweiten Winkeldifferenz.

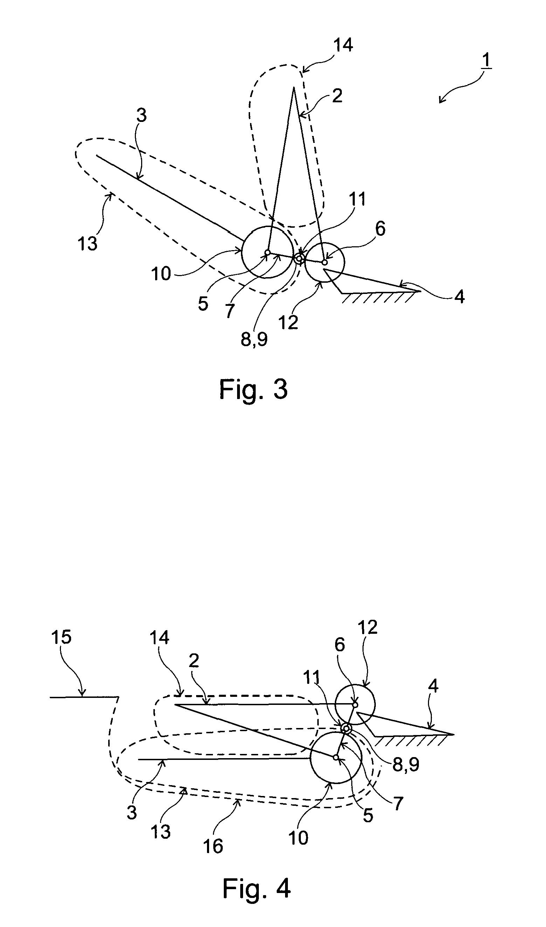

In Fig. 3 ist der Fahrzeugklappsitz 1 in einer weiteren Zwischenposition dargestellt. Bei einer einklappenden Bewegung des Fahrzeugklappsitzes 1 folgt die hier dargestellte Position zu einem späteren Zeitpunkt auf die in Fig. 2 gezeigte Position.

Fig. 4 zeigt den Fahrzeugklappsitz 1 nach Fig. 1 in der Endposition. Die Unterseite der Sitzfläche 2 zeigt nach oben, so dass die Gesamtwinkeldifferenz zwischen der Ausgangsposition und der Endposition der Sitzfläche 2 etwa 180° beträgt. Die Gesamtwinkeldifferenz zwischen der Ausgangsposition und der Endposition der Rückenlehne 3 relativ zur Sitzfläche ist durch den Winkel in Fig. 1 gegeben, den die Rückenlehne 3 mit der Sitzfläche 2 einschließt, dieser Winkel ist kleiner als 180° und beträgt hier ca. 100°. Der Radius des ersten Ritzels 10 ist somit um das Winkelverhältnis von ca. 1,8 gegenüber dem Radius des zweiten Ritzels 12 vergrößert. Die Sitzfläche 2 ist in dieser Darstellung im wesentlichen höhengleich zu einem Kofferraumboden 15 im Fahrzeuginnenraum angeordnet, was dadurch erreicht wird, dass der Fahrzeugklappsitz 1 in einer eigens dafür eingerichteten Wanne 16 versenkt wird.

In einer nicht dargestellten Alternative ist der Fahzeugklappsitz manuell von der ausgeklappten Position in die Endposition verstellbar. In dieser Ausführung entfällt die Antriebseinheit 9. Durch ein Anheben der Sitzfläche 2 wird das Kopplungsritzel 11 auf dem zweiten Ritzel 12 in Bewegung versetzt, es gewährleistet lediglich die automatische Bewegung der Rückenlehne 3 auf die Sitzfläche 2 während des Einklapprozesses.

### Bezugszeichenliste

- 1: Fahrzeugklappsitz
- 2: Sitzfläche
- 3: Rückenlehne
- 4: Sitzbasis
- 5: erste Drehachse
- 6: zweite Drehachse
- 7: Sitzgestänge
- 8: Rotationsachse
- 9: Antriebseinheit
- 10: erstes Ritzel
- 11: Kopplungsritzel
- 12: zweites Ritzel
- 13: Rückenlehnenbezug
- 14: Sitzbezug
- 15: Kofferraumboden
- 16: Wanne
- L: positive Umlaufrichtung
- R: negative Umlaufrichtung

## Patentansprüche

1. Fahrzeugklappsitz (1), mit einer Sitzfläche (2), mit einer Rückenlehne (3) und mit einer Sitzbasis (4),
wobei
- die Sitzfläche (2) und die Rückenlehne (3) rückwärtig in eine Endposition verfahrbar sind,
- die Verfahrbewegung der Sitzfläche (2) mit der Verfahrbewegung der Rückenlehne (3) gekoppelt ist, und
- während der Verfahrbewegung die Rückenlehne (3) bezüglich der Sitzfläche (2) eine Rotationsbewegung um eine erste Drehachse (5) ausführt, und die Sitzfläche (2) bezüglich der Sitzbasis (4) eine Rotationsbewegung um eine zweite Drehachse (6) ausführt, wobei beide Drehachsen (5,6) zueinander parallelverschoben angeordnet sind.

2. Fahrzeugklappsitz (1) nach Anspruch 1,
wobei
in der Endposition die Rückenlehne (3) und die Sitzfläche (2) im wesentlichen parallel zueinander angeordnet sind,

3. Fahrzeugklappsitz (1) nach Anspruch 1 oder 2,
wobei
die Sitzfläche (2) oder die Rückenlehne (3) in der Endposition zumindest teilweise versenkt sind.

4. Fahrzeugklappsitz (1) nach Anspruch 3,
wobei
die Unterseite der Sitzfläche (2) im wesentlichen höhengleich zu einer Basisfläche im rückseitigen Fahrzeuginnenraum angeordnet ist.

5. Fahrzeugklappsitz (1) nach einem der Ansprüche 1 bis 4,
wobei
auf der ersten Drehachse (5) ein erstes Ritzel (10) und auf der zweiten Drehachse (6) ein zweites Ritzel (12) angeordnet sind, wobei
- das erste Ritzel (10) fest mit der Rückenlehne (3) verbunden ist,
- das zweite Ritzel (12) fest mit der Sitzbasis (3) verbunden ist,
- das erste Ritzel (10) und das zweite Ritzel (12) über ein Kopplungsritzel (11) gekoppelt sind, das bezüglich der Sitzfläche (2) drehbar gelagert ist.

6. Fahrzeugklappsitz (1) nach Anspruch 5,
wobei
die erste Drehachse (5), die zweite Drehachse (6) und die Rotationsachse (8) des Kopplungsritzels (11) auf einem gemeinsamen Sitzgestänge (7) angeordnet sind.

7. Fahrzeugklappsitz (1) nach Anspruch 2 oder 3,
wobei
das Kopplungsritzel (11) durch eine motorische Antriebseinheit (9) angetrieben ist.
